# EUROPÄISCHE PATENTANMELDUNG

(11) **EP 4 682 412 A1**
(43) Veröffentlichungstag der Anmeldung: **21.01.2026**
(21) Anmeldenummer: 25189480.4
(22) Anmeldetag: 15.07.2025
(51) Int. Cl.: F16K 7/12, F16K 7/16

(54) **PROZESSVENTIL, SPANNELEMENT FÜR PROZESSVENTIL, VERFAHREN ZUR HERSTELLUNG VON SPANNELEMENTEN**

(30) Priorität: 17.07.2024 DE 102024120209
(71) Anmelder: GEMÜ Gebr. Müller Apparatebau GmbH & Co. Kommanditgesellschaft, 74653 Ingelfingen (DE)
(72) Erfinder: Matter, Simon, 74747 Ravenstein (DE); Falkenberger, Christian, 97980 Bad Mergentheim (DE)
(74) Vertreter: DREISS Patentanwälte PartG mbB

(57) **Zusammenfassung**

Die Erfindung betrifft Prozessventil (10) umfassend: einen Ventilkörper (12) mit einer Durchgangsleitung (14), einen Absperrkörper (20) mit einem Befestigungsabschnitt (34) und mit einem Absperrabschnitt (21), wobei die Durchgangsleitung (14) mittels des entlang einer Stellachse (22) beweglichen Absperrabschnitts (21) verschließbar ist; ein Spannelement (32); und eine mit dem Absperrabschnitt (21) verbundene und durch einen Innenraum (44) des Spannelements (32) erstreckende Antriebsstange (30); wobei das Spannelement (32) umfasst: einen Spannabschnitt (40), wobei der Befestigungsabschnitt (34) zwischen dem Spannabschnitt (40) und dem Ventilkörper (12) fluiddicht verspannt ist, einen Abstützabschnitt (86), wobei das Spannelement (32) sich mittels des Abstützabschnitts (86) zumindest mittelbar am Ventilkörper (12) abstützt, und einen Federabschnitt (42) zum Verspannen des Befestigungsabschnitts (34); wobei der Federabschnitt (42) eine bogenförmige Wandung (43) umfasst, wobei die Wandung (43) zumindest abschnittsweise in den Innenraum (44) des Spannelements (43) hineinragt, und wobei die Wandung (43) zwischen dem Abstützabschnitt (86) und dem Spannabschnitt (40) angeordnet ist.

## Beschreibung

Die Erfindung betrifft ein Prozessventil. Die Erfindung betrifft ferner ein Spannelement für ein Prozessventil und ein Verfahren zur Herstellung von Spannelementen.

In Ventilen kommen Absperrkörper zum Einsatz, welche sich mit der Zeit setzen. Aus der DE102014013512 ist ein Prozessventil mit einem auf einen Absperrkörper einen Druck ausübenden Federelement zum Entgegenwirken des Setzverhaltens des Absperrkörpers bekannt, wobei das Federelement als eine Tellerfeder ausgebildet ist.

Der Erfindung liegt die Aufgabe zugrunde, ein Prozessventil bereitzustellen, welches einfach, kostengünstig und schnell herstellbar ist.

Die der Erfindung zugrundeliegende Aufgabe wird gelöst durch ein Prozessventil mit den Merkmalen des Anspruchs 1. Die Erfindung ist gerichtet auf ein Prozessventil umfassend einen Ventilkörper mit wenigstens einer Durchgangsleitung, einen im Betrieb im Ventilkörper angeordneten Absperrkörper mit einem Befestigungsabschnitt und mit einem Absperrabschnitt, wobei die Durchgangsleitung mittels des entlang einer Stellachse beweglichen Absperrabschnitts verschließbar ist, ein im Betrieb im Ventilkörper angeordnetes Spannelement und eine mit dem Absperrabschnitt verbundene und durch einen Innenraum des Spannelements erstreckende Antriebsstange. Das Spannelement umfasst einen Spannabschnitt, wobei der Befestigungsabschnitt zwischen dem Spannabschnitt und dem Ventilkörper fluiddicht verspannt ist, einen Abstützabschnitt, wobei das Spannelement sich mittels des Abstützabschnitts zumindest mittelbar am Ventilkörper abstützt, und einen Federabschnitt zum Ausbilden einer Vorspannkraft, welche entgegen einer durch den Befestigungsabschnitt des Absperrkörpers auf den Abstützabschnitt des Spannelements wirkenden Kraft entgegenwirkt. Der Federabschnitt umfasst eine in einem mit der Stellachse zusammenfallenden Schnitt bogenförmige Wandung. Die Wandung ragt zumindest abschnittsweise in den Innenraum des Spannelements hinein und ist zwischen dem Abstützabschnitt und dem Spannabschnitt angeordnet.

Durch das Verklemmen des Befestigungsabschnitts zwischen dem Ventilkörper und dem Spannelement wird die Dichtheit am Befestigungsabschnitt gewährleistet. Der Federabschnitt stellt sicher, dass die Dichtheit auch nach dem Zurücksetzen des Absperrkörpers gewährleistet bleibt. Aufgrund der Integration des Federabschnitts als Vorspannelement in das Spannelement sind weniger Einzelteile beim Prozessventil erforderlich. Folglich kann das Prozessventil einfacher, kostengünstiger und schneller montiert werden. Ferner wird das Fehlerpotential bei der Montage verringert, da weniger Teile zusammengebaut werden. Demnach wird die Qualität und Zuverlässigkeit des Prozessventils verbessert. Die bogenförmige Wandung ermöglicht ein materialsparendes Verspannen des Befestigungsabschnitts. Durch die in den Innenraum hineinragende Anordnung der Wandung ist eine elastische Bewegung des Federabschnitts im Inneren vorgegeben, sodass das Prozessventil besonders platzsparend ausgebildet ist. Aufgrund der Ausbildung des Federabschnitts als Wandung können einfach, präzise und anwendungsgerecht die Federeigenschaften eingestellt bzw. vorgegeben werden.

Im Gegensatz zum Stand der Technik, bei welchem das Spannelement und die Tellerfedern als Vorspannmittel mehrteilig ausgebildet sind, sind das Spannelement und der Federabschnitt als Vorspannmittel vorzugsweise einteilig ausgebildet. Der Federabschnitt bildet vorzugsweise einen federbeinförmigen Bereich des Spannelements.

Das Prozessventil kann auch Ventilblock, insbesondere Mehrwegeventilblock, mit mehreren Durchgangsleitungen ausgebildet sein, wobei insbesondere eine Durchgangsleitung wenigstens zwei Eingänge mit wenigstens einem Ausgang und/oder wenigstens ein Eingang mit wenigstens zwei Ausgänge miteinander verbindet.

Es ist vorteilhaft, wenn die Wandung eine an den Innenraum des Spannelements anschließende, bogenförmige Innenseite und eine an eine Ausnehmung des Spannelements anschließende bogenförmige Außenseite aufweist.

Ein vorteilhafter Aspekt der Beschreibung sieht vor, dass das Spannelement einen den Spannabschnitt umfassenden Druckabschnitt aufweist, und wobei im Betrieb der Druckabschnitt, insbesondere der Spannabschnitt, zwischen dem Federabschnitt und dem Befestigungsabschnitt des Absperrkörpers angeordnet ist. Folglich ist der Federabschnitt entlang der Stellachse vom Befestigungsabschnitt des Absperrkörpers beabstandet. Das Spannelement ist vorzugsweise rotationssymmetrisch und/oder hohl und/oder koaxial zur Stellachse angeordnet ausgebildet. Das Spannelement ist vorzugsweise hülsenförmig ausgebildet.

Ein vorteilhafter Aspekt der Beschreibung sieht vor, dass der Federabschnitt, insbesondere die Wandung, eine erste Wandstärke und der Spannabschnitt eine zweite Wandstärke aufweist, und wobei die erste Wandstärke kleiner als die zweite Wandstärke ausgebildet ist. Folglich ist der Federabschnitt dünnwandig und der Spannabschnitt dickwandig ausgebildet. Demnach ergeben sich für die Kraftübertragung im Bereich des Absperrkörpers optimale Verhältnisse. Das Federelement ist vorzugsweise im Gegensatz zum Spannabschnitt dünner ausgebildet, um eine geeignete Federkennlinie zu realisieren.

Ein vorteilhafter Aspekt der Beschreibung sieht vor, dass der Federabschnitt einen des Absperrkörpers zugewandten und/oder sich entlang der Stellachse verjüngenden ersten Abschnitt aufweist. Vorzugsweise weist der Federabschnitt einen des Absperrkörpers abgewandten und/oder sich entlang der Stellachse aufweitenden zweiten Abschnitt auf. Zudem weist der Federabschnitt vorzugsweise einen den ersten Abschnitt und den zweiten Abschnitt verbindenden Bogenabschnitt auf. Der Bogenabschnitt ist vorzugsweise entlang der Stellachse zwischen dem ersten Abschnitt und dem zweiten Abschnitt angeordnet. Der Bogenabschnitt verläuft vorzugsweise bogenförmig bzw. die Innen- und/oder Außenseite des Federabschnitts verlaufen im Bogenabschnitt vorzugsweise bogenförmig. Der erste Abschnitt verläuft vorzugsweise entlang einer kegelförmigen ersten Ebene. Der zweite Abschnitt verläuft vorzugsweise entlang einer kegelförmigen zweiten Ebene. Der erste Abschnitt schließt vorzugsweise unmittelbar an den Druckabschnitt an. Die Außenseite des Spannelements verläuft vorzugsweise im Übergang vom Druckabschnitt zum zweite Abschnitt parallel zur zweiten Ebene.

Vorzugsweise ist die erste Wandstärke des Federabschnitts im ersten Abschnitt und/oder im Bogenabschnitt und/oder im zweiten Abschnitt im Wesentlichen konstant ausgebildet. Demnach ist das Spannelement besonders einfach herzustellen.

Es ist vorteilhaft, wenn in Bezug auf die Stellachse nach radial außen der Bogenabschnitt konkav ausgebildet ist. Folglich ist im Betrieb eine Verformung des Federabschnitts vorgegeben, wobei beim Vorspannen des Spannelements der erste Abschnitt und der zweite Abschnitt aufeinander zu bewegt werden.

Ein weiterer vorteilhafter Aspekt der Beschreibung sieht vor, dass im nicht montierten Zustand und/oder im Betrieb der erste Abschnitt und/oder zweite Abschnitt parallel oder schräg zur Stellachse angeordnet sind. Es ist vorteilhaft, wenn der erste Abschnitt und/oder der zweite Abschnitt mit der Stellachse einen Winkel in einem Bereich zwischen 150° und 175°, vorzugsweise zwischen 160° und 170°, einschließen. Dabei ist zu beachten, dass für den ersten Abschnitt und den zweiten Abschnitt der kleinere Winkel zur Stellachse hin gemessen wird. Aufgrund der elastischen Ausbildung des Federabschnitts verändern sich je nach Vorspannkraft und/oder Ventilstellung die Winkel zwischen dem ersten Abschnitt bzw. dem zweiten Abschnitt und der Stellachse. Bei maximaler Last auf den Federabschnitt verlaufen der erste Abschnitt und der zweite Abschnitt vorzugsweise parallel zueinander und/oder senkrecht zur Stellachse.

Es ist vorteilhaft, wenn der Bogenabschnitt einen Radius in einem Bereich zwischen 0,5 mm und 5 mm, insbesondere zwischen 1 mm und 4 mm, vorzugsweise zwischen 2 mm und 3 mm, aufweist.

Ein vorteilhafter Aspekt der Beschreibung sieht vor, dass im Betrieb der Abstützabschnitt des Spannelements sich an einem zum Ventilkörper separat ausgebildeten Montagestück abstützt. Vorzugsweise ist das Montagestück in den Ventilkörper einschraubbar. Demnach kann das Spannelement in den Ventilkörper eingesetzt werden und mit dem Montagestück festgesetzt werden. Vorzugsweise ist am Ventilkörper ein Innengewinde und am Montagestück ein Außengewinde angeordnet oder vice versa. Folglich ist das Spannelement einfach im Prozessventil montierbar. Das Montagestück ist vorzugsweise rotationssymmetrisch und/oder hohl und/oder koaxial zur Stellachse angeordnet ausgebildet. Das Montagestück kann als Montagebuchse ausgebildet sein. Alternativ können das Montagestück und der Ventilkörper mittels Schrauben miteinander verbunden werden.

Ein vorteilhafter Aspekt der Beschreibung sieht vor, dass im Betrieb das Spannelement, vorzugsweise mittels des Montagestücks, zum Befestigungsabschnitt hin vorgespannt ist. Demnach wird einem Zurücksetzen des Absperrkörpers, insbesondere im Befestigungsabschnitt, über den Betriebsverlauf weiter entgegengewirkt.

Es ist ferner vorteilhaft, wenn der Absperrabschnitt des Absperrkörpers mittels eines Antriebs zwischen der Öffnungsstellung und der Schließstellung verlagerbar ist. Der Befestigungsabschnitt des Absperrkörpers ist durch das Spannelement festgesetzt. Der Antrieb weist vorzugsweise ein Antriebsgehäuse auf, wobei im Betrieb der Abstützabschnitt des Spannelements sich zusätzlich oder alternativ am Antriebsgehäuse abstützt. Es ist denkbar, dass der Abstützabschnitt senkrecht zur Stellachse zwischen dem Antriebsgehäuse und dem Montagestück angeordnet ist. Demnach ist das Spannelement radial zur Stellachse in einer Abstützaufnahme sicher gehalten.

Ein vorteilhafter Aspekt der Beschreibung sieht vor, dass zwischen dem Montagestück und dem Spannelement und/oder zwischen dem Antriebsgehäuse und dem Spannelement ein Abstützring angeordnet ist. Demnach stützt sich das Spannelement mittelbar am Montagestück und/oder am Antriebsgehäuse ab. Folglich ergibt sich eine bevorzugte Kraftverteilung. Der Abstützring ist vorzugsweise rotationssymmetrisch und/oder hohl und/oder koaxial zur Stellachse ausgebildet. Der Federabschnitt kann alternativ auch als Finger ausgebildet sein, wobei vorzugsweise die Federrate einstellbar ist. Es ist denkbar, dass der Abstützring senkrecht zur Stellachse zwischen dem Antriebsgehäuse und dem Montagestück, insbesondere in einer Abstützaufnahme, angeordnet ist. Demnach ist das Abstützring radial zur Stellachse sicher gehalten.

Die der Erfindung zugrundeliegende Aufgabe wird ebenfalls gelöst durch ein Spannelement mit den Merkmalen des Anspruchs 13. Die Erfindung ist gerichtet auf ein Spannelement für ein Prozessventil, insbesondere für ein zuvor beschriebenes Prozessventil, mit einem Abstützabschnitt zum zumindest mittelbaren Abstützen an einem Ventilkörper des Prozessventils, mit einem Spannabschnitt zum Kontaktieren eines Befestigungsabschnitts eines Absperrkörpers und mit einem Federabschnitt zum fluiddichten Verspannen des Befestigungsabschnitts. Der Federabschnitt weist eine in einem mit der Stellachse zusammenfallenden Schnitt bogenförmige Wandung auf, wobei die Wandung zumindest abschnittsweise in einen Innenraum des Spannelements hineinragt. Die Wandung ist vorzugsweise zwischen dem Abstützabschnitt und dem Spannabschnitt angeordnet.

Aufgrund der Integration des Federabschnitts in das Spannelement sind weniger Einzelteile für das Prozessventil erforderlich. Folglich kann das Prozessventil einfacher, kostengünstiger und schneller montiert werden. Ferner wird das Fehlerpotential bei der Montage verringert, da weniger Teile zusammengebaut werden. Demnach wird die Qualität und Zuverlässigkeit des Prozessventils verbessert.

Es ist vorteilhaft, wenn die Wandung eine an den Innenraum des Spannelements anschließende, bogenförmige Innenseite und eine an eine Ausnehmung des Spannelements anschließende bogenförmige Außenseite aufweist. Das Spannelement ist vorzugsweise rotationssymmetrisch und/oder hohl ausgebildet. Vorzugsweise weist das Spannelement einen an den Federabschnitt angrenzenden, den Spannabschnitt umfassenden Druckabschnitt auf.

Ein vorteilhafter Aspekt der Beschreibung sieht vor, dass der Federabschnitt einen an den Druckabschnitt anschließenden und/oder sich entlang der Stellachse verjüngenden ersten Abschnitt, einen dem Druckabschnitt abgewandten und/oder sich entlang der Stellachse aufweitenden zweiten Abschnitt und einen den ersten Abschnitt und den zweiten Abschnitt verbindenden Bogenabschnitt aufweist.

Ein vorteilhafter Aspekt der Beschreibung sieht vor, dass in Bezug auf die Stellachse nach radial außen der Bogenabschnitt konvex ausgebildet ist und/oder wobei im Betrieb der erste Abschnitt und/oder der zweite Abschnitt parallel oder schräg zur Stellachse angeordnet sind, insbesondere der erste Abschnitt und/oder der zweite Abschnitt mit der Stellachse einen Winkel in einem Bereich zwischen 150° und 175°, vorzugsweise zwischen 160° und 170°, einschließen. Aufgrund der elastischen Ausbildung des Federabschnitts verändern sich je nach Vorspannkraft und/oder Ventilstellung die Winkel zwischen dem ersten Abschnitt bzw. dem zweiten Abschnitt und der Stellachse.

In einer anderen Ausführungsform sind der erste und/oder zweite Abschnitt parallel zur Stellachse angeordnet.

Es ist vorteilhaft, wenn der Bogenabschnitt einen Radius in einem Bereich zwischen 0,5 mm und 5 mm, insbesondere zwischen 1 mm und 4 mm, vorzugsweise zwischen 2 mm und 3 mm, aufweist.

Die der Erfindung zugrundeliegende Aufgabe wird ebenfalls gelöst durch ein Verfahren mit den Merkmalen des Anspruchs 17. Die Erfindung ist gerichtet auf ein Verfahren zur Herstellung eines zuvor beschriebenen Spannelements, wobei das Spannelement in einem Urformungsverfahren und/oder Umformungsverfahren und/oder trennenden Fertigungsverfahren hergestellt wird. Das Spannelement ist vorzugsweise in einem Spritzgussverfahren hergestellt.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und der Beschreibung genannten Merkmale jeweils einzeln für sich oder in beliebiger Kombination erfindungswesentlich sein.

Es zeigen:
- Fig. 1: eine seitliche Schnittansicht eines aus dem Stand der Technik bekannten Prozessventils mit Tellerfedern;
- Fig. 2: eine seitliche Schnittansicht eines erfindungsgemäßen Prozessventils mit einem erfindungsgemäßen Spannelement;
- Fig. 3: eine seitliche Ansicht eines Spannelements gemäß Fig. 2 in einem ungespannten Zustand;
- Fig. 4: eine seitliche Ansicht eines Spannelements gemäß Fig. 2 in einem gespannten Zustand; und
- Fig. 5: eine seitliche Schnittansicht eines Spannelements gemäß Fig. 2 in einem gespannten Zustand.

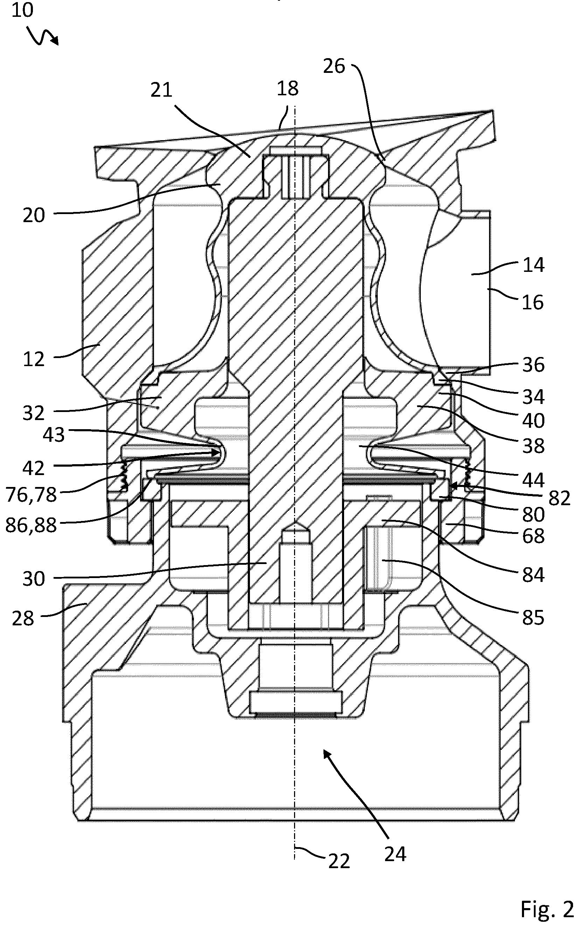

Gemäß Fig. 2 weist das erfindungsgemäße Prozessventil 10 einen Ventilkörper 12 mit einer Durchgangsleitung 14 auf, wobei sich die Durchgangsleitung 14 zwischen einem Eingang 16 und einem Ausgang 18 erstreckt. Im Betrieb ist im Ventilkörper 12 ein rotationssymmetrischer Absperrkörper 20 mit einem Absperrabschnitt 21 und einem Befestigungsabschnitt 34 angeordnet, wobei der Absperrabschnitt 21 entlang einer Stellachse 22 zwischen einer Öffnungsstellung zum Öffnen der Durchgangsleitung 14 und einer Schließstellung zum Schließen der Durchgangsleitung 14 mittels eines Antriebs 24 verlagerbar ist. In der Öffnungsstellung sind der Eingang 16 und der Ausgang 18 fluidisch miteinander verbunden. In der Schließstellung sind der Eingang 16 und der Ausgang 18 fluidisch voneinander getrennt. Der Absperrkörper 20 ist vorzugsweise als Plug-Absperrkörper 20 ausgebildet. Der Absperrkörper 20 liegt in der Schließstellung auf einem rotationssymmetrischen Befestigungssitz 26 des Ventilkörpers 12 auf.

Der Antrieb 24 ist in einem Antriebsgehäuse 28 angeordnet ist, wobei das Antriebsgehäuse 28 an dem Ventilkörper 12 befestigt, vorzugsweise verschraubt, ist. Eine Antriebsstange 30 des Antriebs 24 ist einerseits mit einer nicht dargestellten Antriebseinrichtung verbunden und andererseits mit dem Absperrkörper 20 zum Verlagern des Absperrabschnitts 21 verbunden, insbesondere verschraubt. Die Antriebsstange 30 erstreckt sich im Betrieb teilweise vom Antriebsgehäuse 28 in den Ventilkörper 12 hinein.

Zur Befestigung des Absperrkörpers 20 im Ventilkörper 12 ist ein rotationssymmetrisches Spannelement 32 vorgesehen. Das Spannelement 32 hält bzw. klemmt einen Befestigungsabschnitt 34 des Absperrkörpers 20 gegen einen Befestigungssitz 36 des Ventilkörpers 12, sodass der Absperrkörper 20 im Ventilkörper 12 befestigt ist.

Das Spannelement 32 weist dazu einen dem Absperrkörper 20 zugewandten Druckabschnitt 38 mit einem Spannabschnitt 40 und einem zum Absperrkörper 20 abgewandten Federabschnitt 42 zum federbelasteten Verspannen des Spannelements 32, insbesondere des Spannabschnitts 40, gegen den Befestigungsabschnitt 34 des Absperrkörpers 20 auf. Der Federabschnitt 42 dient dazu, dass der Absperrkörper 20 auch dann im Ventilkörper 12 sicher gehalten oder verklemmt ist, wenn der Absperrkörper 20 sich mit der Zeit im Betrieb setzt. Durch die Integration des Federabschnitts 42 im Spannelement 32 ist eine leichtere Montage und eine kleinere Bauraumhöhe des Prozessventils 10 erzielbar. Der Federabschnitt 42 weist eine bogenförmige Wandung 43 auf.

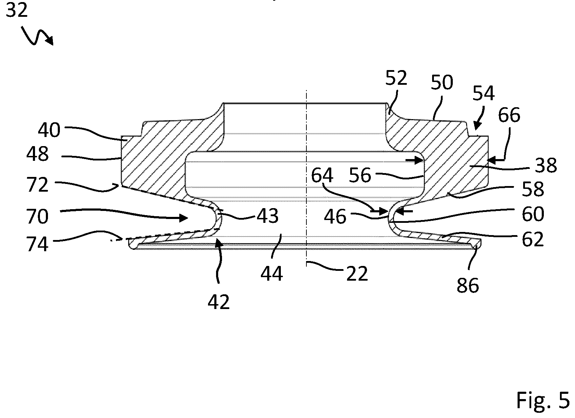

Das Spannelement 32 ist gemäß Fig. 5 hohl ausgebildet und weist innenseitig einen Innenraum 44 auf. Das Spannelement 32 weist ferner eine zur Stellachse 22 zugewandte, an dem Innenraum 44 angrenzende Innenseite 46 und eine von der Stellachse 22 abgewandte Außenseite 48 auf. Der Innenraum 44 ist derart ausgebildet, dass sich die Antriebsstange 30 durch den Innenraum 44 des Spannelements 32 in den Ventilkörper 12 hineinerstreckt. Zur Führung des Antriebs 24 weist der Druckabschnitt 38 an einer dem Absperrkörper 20 zugewandten Spannseite 50 des Spannelements 32 eine an der Antriebsstange 30 anschließende Führungslippe 52 auf. Ferner weist das Spannelement 32 eine Ringaufnahme 54 zur zumindest teilweisen Aufnahme des Absperrkörpers 20, insbesondere des Befestigungsabschnitts 34, auf, wobei die Ringaufnahme 54 an die Spannseite 50 und/oder Außenseite 48 des Spannelements 32 anschließt. Demnach ist vorzugsweise der Befestigungsabschnitt 34 parallel und/oder senkrecht zur Stellachse 22 zwischen dem Befestigungssitz 36 und dem Spannelement 32 gehalten bzw. geklemmt.

Das Spannelement 32 weist zudem im Innenraum 44 einen Innenabsatz 56 auf, welcher einen größeren Innendurchmesser als die Führungslippe 52 aufweist. Im Bereich des Innenabsatzes 56 ist die Antriebsstange 30 senkrecht zur Stellachse 22 zum Spannelement 32 beabstandet angeordnet. An den Innenabsatz 56 schließt entlang der Stellachse 22 der Federabschnitt 42 an.

Der Federabschnitt 42 weist einen ersten Abschnitt 58, einen Bogenabschnitt 60 und einen zweiten 62 auf. Der erste Abschnitt 58 grenzt an den Druckabschnitt 38 und/oder den Innenabsatz 56 an. Der Bogenabschnitt 60 ist zwischen dem ersten Abschnitt 58 und dem zweiten Abschnitt 62 angeordnet.

Der erste Abschnitt 58 ist an der Außenseite 48 bündig zum Druckabschnitt 38 ausgebildet und/oder geht an der Außenseite 48 in den Druckabschnitt 38 über. Der erste Abschnitt 58 geht an der Innenseite 46 in den Innenabsatz 56 über. Der erste Abschnitt 58 verjüngt sich entlang der Stellachse 22. Die Außenseite 48 des ersten Abschnitts 58 und/oder der angrenzende Bereich des Druckabschnitts 38 sind vorzugsweise kegelförmig ausgebildet. Der erste Abschnitt 58, insbesondere die Außenseite 48 am ersten Abschnitt 58, schließt im nicht montierten Zustand und/oder im Betrieb mit der Stellachse 22 einen Winkel ein, welcher in einem Bereich zwischen 150° und 175°, vorzugsweise zwischen 160° und 170°, liegt.

Der Bogenabschnitt 60 verbindet den ersten Abschnitt 58 und den zweiten Abschnitt 62. Der Bogenabschnitt 60 weist einen Innendurchmesser auf, welcher gleich oder kleiner ist als Innendurchmesser der Führungslippe 52. Der Bogenabschnitt 60 weist einen Krümmungsradius auf, welcher in einem Bereich zwischen 0,5 mm und 5 mm, insbesondere zwischen 1 mm und 4 mm, vorzugsweise zwischen 2 mm und 3 mm, liegt. Demnach sind sowohl die Innenseite 46 als auch die Außenseite 48 im Bogenabschnitt 60 bogenförmig ausgebildet.

Der zweite Abschnitt 62 dient zur Kraftübertragung der Verspannkraft zumindest mittelbar vom Ventilkörper 12 über den Federabschnitt 42 und den Druckabschnitt 38 auf den Befestigungsabschnitt 34 des Absperrkörpers 20. Der zweite Abschnitt 62 weitet sich entlang der Stellachse 22 auf. Die Außenseite 48 des zweiten Abschnitts 62 ist vorzugsweise kegelförmig ausgebildet. Der zweite Abschnitt 62, insbesondere die Außenseite 48 am zweiten Abschnitt 62, schließt im nicht montierten Zustand und/oder im Betrieb mit der Stellachse 22 einen Winkel ein, welcher in einem Bereich zwischen 150° und 175°, vorzugsweise zwischen 160° und 170°, liegt.

Die Außenseite 48 weist im Druckabschnitt 38 einen größeren Außendurchmesser als im zweiten Abschnitt 62 auf.

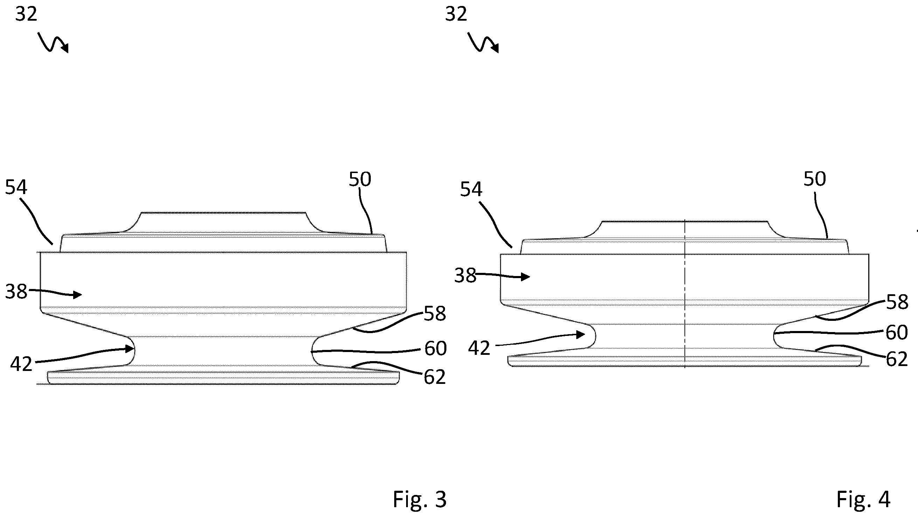

Im belasteten und/oder vorgespannten Zustand werden der erste Abschnitt 58 und der zweite Abschnitt 62 aufeinander zu verlagert, wobei der Bogenabschnitt 60 als eine Art Scharnier dient. Dabei verringern sich gemäß Fig. 3 und 4 betragsmäßig die Winkel, welche jeweils der erste Abschnitt 58 und/oder der zweite Abschnitt 62 mit der Stellachse 22 einschließen.

Der Federabschnitt 42, insbesondere die Wandung 43, ist vorzugsweise dünnwandig ausgebildet. Der Druckabschnitt 38 ist vorzugsweise dickwandig ausgebildet. Demnach ist eine erste Wandstärke 64 des Federabschnitts 42, insbesondere der Wandung 43, kleiner als eine zweite Wandstärke 66 des Druckabschnitts 38 ausgebildet. Die erste Wandstärke 64 ist vorzugsweise konstant über den Bogenabschnitt 60 und/oder den ersten Abschnitt 58 und/oder den zweiten Abschnitt 62 ausgebildet.

Die Innenseite 46 des Federabschnitts 42, insbesondere der Wandung 43, schließt innenseitig unmittelbar an den Innenraum 44 des Spannelements 32 an. Die Außenseite 48 des Federabschnitts 42, insbesondere der Wandung 43, schließt außenseitig unmittelbar an eine Ausnehmung 70 des Spannelements 32 an. Der Federabschnitt 42, insbesondere die Wandung 43, ist bogenförmig ausgebildet, wobei der Bogenabschnitt 60 einen Bogen mit einem Krümmungsradius ausbildet. Die Außenseite 48 des ersten Abschnitts 58 verläuft entlang einer kegelförmigen ersten Ebene 72. Die Außenseite 48 des zweiten Abschnitts 62 verläuft entlang einer kegelförmigen zweiten Ebene 74.

Zur Montage des Prozessventils 10 wird der Absperrkörper 20 gemäß Fig. 2 in den Ventilkörper 12 eingelegt, sodass der Absperrkörper 20 mit dem Befestigungsabschnitt 34 am Befestigungssitz 36 anliegt. Anschließend wird das Spannelement 32 in den Ventilkörper 12 eingeführt, wobei der Befestigungsabschnitt 34 in die Ringaufnahme 54 des Spannelements 32 eingreift. Anschließend wird ein rotationssymmetrisches und/oder hohles Montagestück 68, insbesondere in Form einer Montagebuchse, am Ventilkörper 12 befestigt, wobei das Montagstück 68 mit einem Außengewinde 76 an einem Innengewinde 78 des Ventilkörpers 12 angeschraubt wird. Ferner wird das Antriebsgehäuse 28 am Ventilkörper 12 befestigt. Es ist denkbar, dass das Antriebsgehäuse 28 mittels des Montagestücks 68 am Ventilkörper 12 festgesetzt wird.

Das Montagestück 68 und/oder das Antriebsgehäuse 28 kontaktieren das Spannelement 32 unmittelbar an einem Abstützabschnitt 86 oder mittelbar über einen rotationssymmetrischen Abstützring 80. In einem Fall liegt das Montagestück 68 und/oder das Antriebsgehäuse 28 unmittelbar am Spannelement 32 an. Im anderen Fall wird die Kraft vom Montagestück 68 und/oder dem Antriebsgehäuse 28 mittels des Abstützrings 80 auf das Spannelement 32 übertragen. Das Montagestück 68 und das Antriebsgehäuse 28 bilden vorzugsweise eine topfförmige Abstützausnehmung 82, in welche das Spannelement 32 und/oder der Abstützring 80 eingreift. In dem Fall ist das Spannelement 32 und/oder der Abstützring 80 nicht nur parallel, sondern auch senkrecht zur Stellachse 22 sicher gehalten. Das Montagestück 68 und/oder das Antriebsgehäuse 28 sind derart am Ventilkörper 12 montiert, dass das Spannelement 32 in Richtung des Absperrkörpers 20 vorgespannt ist. Im vorgespannten Zustand werden der Abstützabschnitt 62 und der Zwischenabschnitt 58 aufeinander zu verlagert.

Am Abstützabschnitt 86 kann gemäß Fig. 5 vorzugsweise ringförmig Wulst angeordnet sein, welche im montierten Zustand in eine Abschlussnut 88 des Abstützrings 80 und/oder der Abstützausnehmung 82 eingreift, sodass das Spannelement 32 leichter montierbar und senkrecht zur Stellachse 22 fixierbar ist.

An der Antriebsstange 30 kann gemäß Fig. 2 vorzugsweise ein Antriebsbund 84 angeordnet sein, welcher die Antriebsstange 30 umgibt. Der Antriebsbund 84 ist im Schnitt T-förmig ausgebildet. Der Antriebsbund 84 liegt an einer Innenseite 46 des Antriebsgehäuses 28 an. Es ist denkbar, dass der Antriebsbund 84 in einer Führungsnut 85 verfahrbar angeordnet ist, sodass der Antrieb 24, insbesondere die Antriebsstange 30, verdrehgesichert ausgebildet ist. Zur Begrenzung der Bewegung des Antriebs 24, insbesondere der Antriebsstange 30, ist der Federabschnitt 42 vorzugsweise derart ausgebildet, dass der Antriebsbund 84 in einer maximalen Auslenkungsposition, in der das Ventil geschlossen ist, zur Anlage an den Federabschnitt 42 gelangt. In dem Fall dient der Antriebsbund 84 als Anschlag.

Vorzugsweise wird das Spannelement 32 zunächst in einem Urformungsverfahren und/oder in einem Umformungsverfahren hergestellt und insbesondere dann in den Ventilkörper 12 eingesetzt. Im Herstellungsverfahren können die Eigenschaften des Spannelements 32, insbesondere die Federkennlinie des Federabschnitts 42, wunschgemäß eingestellt werden, um eine sicheres Verspannen des Absperrkörpers 20 zu gewährleisten.

Der Absperrkörper 20 kann einstückig und zur Stellachse 22 rotationssymmetrisch ausgebildet sein. Mittels eines lateralen, im Längsschnitt dreieckförmig ausgebildeten Befestigungsabschnitts 34 wird der Absperrkörper 20 zum Ventilkörper 12 festgelegt. Insbesondere wird der Befestigungsabschnitt 34 verklemmt. Ein Absperrabschnitt 21 wirkt mit einem Ventilsitz 26 zusammen, um einen Strom eines Prozessfluids durch das Prozessventil 10 zu begrenzen. Eine dünne Membranwandung verbindet gemäß Fig. 2 den Befestigungsabschnitt 34 mit dem entlang der Stellachse 22 beweglichen Absperrabschnitt 21. Ist der Absperrkörper 20 innerhalb des Ventilkörpers 12 angeordnet und mittels des lateralen Befestigungsabschnitts 34 zu dem Ventilkörper 12 festgelegt, so trennt der Absperrkörper 20 eine Medienseite von einer Trockenseite.

Ein erster Wandungsverlauf 200 wölbt sich in Richtung der Trockenseite und begrenzt damit eine medienseitige Kavität. Der erste Wandungsverlauf 200 folgt wenigstens abschnittsweise einem gedachten Torus, welcher durch Drehung eines Kreises mit einem medienseitigen Mittelpunkt und einem Radius um die Stellachse 22 erzeugt wird. Ein zweiter Wandungsverlauf 202 wölbt sich in Richtung der Medienseite und begrenzt damit eine trockenseitige Kavität. Der zweite Wandungsverlauf 202 folgt wenigstens abschnittsweise einem gedachten Torus, welcher durch Drehung eines Kreises mit einem trockenseitigen Mittelpunkt und einem Radius um die Längsachse 22 erzeugt wird. Ein dritter Wandungsverlauf 204 wölbt sich in Richtung der Trockenseite und begrenzt damit eine medienseitige Kavität. Der dritte Wandungsverlauf folgt wenigstens abschnittsweise einem gedachten Torus, welcher durch Drehung eines Kreises mit einem medienseitigen Mittelpunkt und einem Radius um die Stellachse 22 erzeugt wird. Der dritte Wandungsverlauf 204 geht in den massiv ausgebildeten Absperrabschnitt 21 über, welcher auch als Schließkörper bezeichenbar ist, wobei eine nicht gezeigte Tangente des dritten Wandungsverlaufs 204 in einem zugehörigen Übergangspunkt parallel zur Stellachse 22 verläuft. Ein vierter Wandungsverlauf 206 schließt sich an den lateralen Befestigungsabschnitt 34 an und folgt einem gedachten Flachkegel. Damit verjüngt sich der vierte Wandungsverlauf 206 in Richtung des ersten Wandungsverlaufs 200 flachkegelförmig. Selbstverständlich sind auch andere Ausführungsformen des Wandungsverlaufs 206 denkbar. Beispielsweise kann der Wandungsverlauf 206 auch eine Wölbung in Richtung der Trockenseite aufweisen. Eine medienseitige Oberfläche des Wandungsverlaufs 206 stellt damit eine Ablaufgeometrie für das Prozessfluid bereit. Die Ablaufgeometrie für das Prozessfluid schließt sich nach innen an den lateralen Befestigungsabschnitt 34 an. Die Ablaufgeometrie für das Prozessfluid schließt sich nach außen an den ersten Wandungsverlauf 200 an. Mithin befindet sich die Ablaufgeometrie zwischen dem Befestigungsabschnitt 34 und dem ersten Wandungsverlauf 200.

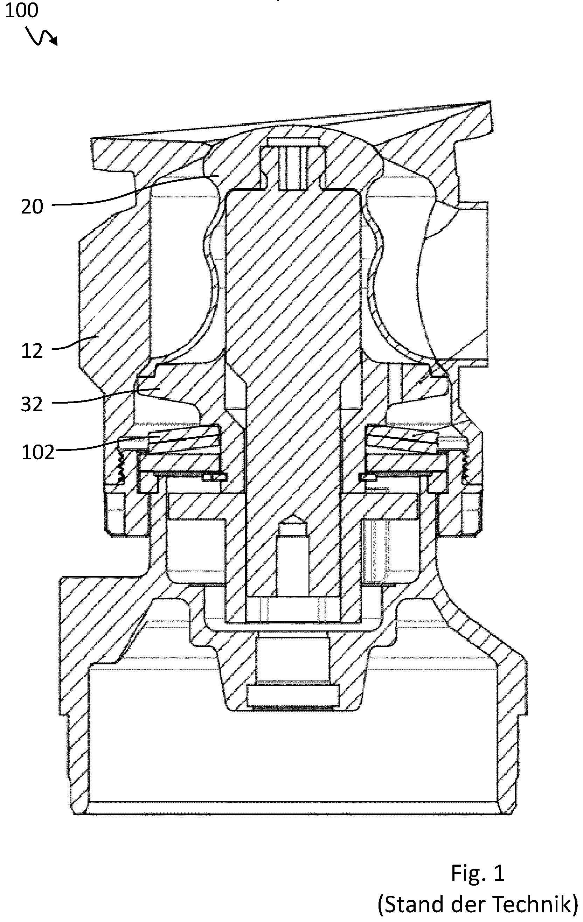

Das aus dem Stand der Technik bekannte Prozessventil 100 weist gemäß Fig. 1 einen Ventilkörper 12 und einen Absperrkörper 20 auf, wobei der Absperrkörper 20 mittels eines Spannelements 32 in dem Ventilkörper 12 gehalten wird. Das Spannelement 32 wird mittels eines Pakets von Tellerfedern 102 gegen der Absperrkörper 20 und den Ventilkörper 12 gedrängt. Die Montage von Tellerfedern 102 erfordert das Handling von mehreren Bauteilen, wobei durch die Integration des Federabschnitts 42 in das Spannelement 32 nur ein einteiliges Spannelement 32 montiert werden muss. Es werden dieselben Bezugszeichen für Merkmale in den aus dem Stand der Technik bekannten und den erfindungsgemäßen Ausführungsformen verwendet.

### Bezugszeichenliste

- 10: Prozessventil
- 12: Ventilkörper
- 14: Durchgangsleitung
- 16: Eingang
- 18: Ausgang
- 20: Absperrkörper
- 21: Absperrabschnitt
- 22: Stellachse
- 24: Antrieb
- 26: Ventilsitz
- 28: Antriebsgehäuse
- 30: Antriebsstange
- 32: Spannelement
- 34: Befestigungsabschnitt
- 36: Befestigungssitz
- 38: Druckabschnitt
- 40: Spannabschnitt
- 42: Federabschnitt
- 43: Wandung
- 44: Innenraum
- 46: Innenseite
- 48: Außenseite
- 50: Spannseite
- 52: Führungslippe
- 54: Ringaufnahme
- 56: Innenabsatz
- 58: erster Abschnitt
- 60: Bogenabschnitt
- 62: zweiter Abschnitt
- 64: erste Wandstärke
- 66: zweite Wandstärke
- 68: Montagestück
- 70: Ausnehmung
- 72: ersten Ebene
- 74: zweiten Ebene
- 76: Außengewinde
- 78: Innengewinde
- 80: Abstützring
- 82: Abstützausnehmung
- 84: Antriebsbund
- 85: Führungsnut
- 86: Abstützabschnitt
- 88: Abschlussnut
- 100: bekanntes Prozessventil
- 102: Tellerfedern

## Patentansprüche

1. Ein Prozessventil (10) umfassend:
- einen Ventilkörper (12) mit wenigstens einer Durchgangsleitung (14),
- einen Absperrkörper (20) mit einem Befestigungsabschnitt (34) und mit einem Absperrabschnitt (21), wobei die Durchgangsleitung (14) mittels des entlang einer Stellachse (22) beweglichen Absperrabschnitts (21) verschließbar ist;
- ein Spannelement (32); und
- eine mit dem Absperrabschnitt (21) verbundene und durch einen Innenraum (44) des Spannelements (32) erstreckende Antriebsstange (30);
wobei das Spannelement (32) umfasst:
- einen Spannabschnitt (40), wobei der Befestigungsabschnitt (34) des Absperrkörpers (20) zwischen dem Spannabschnitt (40) und dem Ventilkörper (12) fluiddicht verspannt ist,
- einen Abstützabschnitt (86), wobei das Spannelement (32) sich mittels des Abstützabschnitts (86) zumindest mittelbar am Ventilkörper (12) abstützt, und
- einen Federabschnitt (42) zum Ausbilden einer Vorspannkraft, welche entgegen einer durch den Befestigungsabschnitt (34) des Absperrkörpers (20) auf den Abstützabschnitt (86) des Spannelements (32) wirkenden Kraft entgegenwirkt;
wobei der Federabschnitt (42) eine bogenförmige Wandung (43) umfasst, wobei die Wandung (43) zumindest abschnittsweise in den Innenraum (44) des Spannelements (43) hineinragt, und wobei die Wandung (43) zwischen dem Abstützabschnitt (86) und dem Spannabschnitt (40) angeordnet ist.

2. Das Prozessventil (10) nach Anspruch 1, wobei die Wandung (43) eine an den Innenraum (44) des Spannelements (32) anschließende, bogenförmige Innenseite (46) und eine an eine Ausnehmung (70) des Spannelements (32) anschließende bogenförmige Außenseite (48) aufweist.

3. Das Prozessventil (10) nach Anspruch 1 oder 2, wobei im Betrieb der Spannabschnitt (40) zwischen dem Federabschnitt (42) und dem Befestigungsabschnitt (34) angeordnet ist.

4. Das Prozessventil (10) nach Anspruch 1, 2 oder 3, wobei der Federabschnitt (42) eine erste Wandstärke (64) und der Spannabschnitt (40) eine zweite Wandstärke (66) aufweist, und wobei die erste Wandstärke (64) kleiner als die zweite Wandstärke (66) ausgebildet ist.

5. Das Prozessventil (10) nach einem der vorherigen Ansprüche, wobei der Federabschnitt (42) einen zum Absperrkörper (20) zugewandten und/oder sich entlang der Stellachse (22) verjüngenden ersten Abschnitt (58), einen vom Absperrkörper (20) abgewandten und/oder sich entlang der Stellachse (22) aufweitenden zweiten Abschnitt (62) und einen den ersten Abschnitt (58) und den zweiten Abschnitt (62) verbindenden Bogenabschnitt (60) aufweist.

6. Das Prozessventil (10) nach den Ansprüchen 4 und 5, wobei die erste Wandstärke (64) des Federabschnitts (42) im ersten Abschnitt (58) und/oder im Bogenabschnitt (60) und/oder im zweiten Abschnitt (62) im Wesentlichen konstant ausgebildet ist.

7. Das Prozessventil (10) nach Anspruch 4 oder 5, wobei in Bezug auf die Stellachse (22) nach radial außen der Bogenabschnitt (60) konvex ausgebildet ist.

8. Das Prozessventil (10) nach einem der vorherigen Ansprüche, wobei im nicht montierten Zustand und/oder im Betrieb der erste Abschnitt (58) und/oder der zweite Abschnitt (62) parallel oder schräg zur Stellachse (22) angeordnet sind, insbesondere der erste Abschnitt (58) und/oder der zweite Abschnitt (62) mit der Stellachse (22) einen Winkel in einem Bereich zwischen 150° und 175°, vorzugsweise zwischen 160° und 170°, einschließen.

9. Das Prozessventil (10) nach einem der vorherigen Ansprüche, wobei im Betrieb der Abstützabschnitt (62) des Spannelements (32) sich an einem zum Ventilkörper (12) separat ausgebildeten Montagestück (68) abstützt.

10. Das Prozessventil (10) nach Anspruch 8, wobei im Betrieb das Spannelement (32) mittels des Montagestücks (68) zum Befestigungsabschnitt (34) hin vorgespannt ist.

11. Das Prozessventil (10) nach einem der vorherigen Ansprüche, wobei der Absperrabschnitt (21) mittels eines Antriebs (24) entlang der Stellachse (22) zwischen einer Öffnungsstellung und einer Schließstellung verlagerbar ist, wobei der Antrieb (24) ein Antriebsgehäuse (28) aufweist, und wobei im Betrieb der Abstützabschnitt (86) sich am Antriebsgehäuse (28) abstützt.

12. Das Prozessventil (10) nach einem oder mehreren der Ansprüche 9 bis 11, wobei zwischen dem Montagestück (68) und dem Spannelement (32) und/oder zwischen dem Antriebsgehäuse (28) und dem Spannelement (32) ein Abstützring (80) angeordnet ist.

13. Ein Spannelement (32) für ein Prozessventil (10), insbesondere nach einem der Ansprüche 1 bis 12, mit einem Abstützabschnitt (86) zum zumindest mittelbaren Abstützen an einem Ventilkörper (12) des Prozessventils (10), mit einem Spannabschnitt (40) zum Kontaktieren eines Befestigungsabschnitts (34) eines Absperrkörpers (20) und mit einem Federabschnitt (42) zum fluiddichten Verspannen des Befestigungsabschnitts (34), wobei der Federabschnitt (42) eine bogenförmige Wandung (43) aufweist, wobei die Wandung (43) zumindest abschnittsweise in einen Innenraum (44) des Spannelements (32) hineinragt, und wobei der Federabschnitt (42), insbesondere die Wandung (43), zwischen dem Abstützabschnitt (86) und dem Spannabschnitt (40) angeordnet ist.

14. Das Spannelement (32) nach Anspruch 13, wobei der Federabschnitt (42), insbesondere die Wandung (43), eine an einen Innenraum (44) des Spannelements (32) anschließende, bogenförmige Innenseite (46) und eine an eine Ausnehmung (70) des Spannelements (32) anschließende bogenförmige Außenseite (48) aufweist.

15. Das Spannelement (32) nach Anspruch 13 oder 14, wobei der Federabschnitt (42), insbesondere die Wandung (43), einen an den Druckabschnitt (38) anschließenden und/oder sich entlang der Stellachse (22) verjüngenden ersten Abschnitt (58), einen dem Spannabschnitt (38) abgewandten und/oder sich entlang der Stellachse (22) aufweitenden zweiten Abschnitt (62) und einen den ersten Abschnitt (58) und den zweiten Abschnitt (62) verbindenden Bogenabschnitt (60) aufweist.

16. Das Spannelement (32) nach Anspruch 15, wobei in Bezug auf die Stellachse (22) nach radial außen der Bogenabschnitt (60) konkav ausgebildet ist und/oder wobei im Betrieb der erste Abschnitt (58) und/oder der zweite Abschnitt (62) parallel oder schräg zur Stellachse (22) angeordnet sind, insbesondere der erste Abschnitt (58) und/oder der zweite Abschnitt (62) mit der Stellachse (22) einen Winkel in einem Bereich zwischen 150° und 175°, vorzugsweise zwischen 160° und 170°, einschließen.

17. Ein Verfahren zur Herstellung eines Spannelements (32) nach einem der Ansprüche 13 bis 16, wobei das Spannelement (32) in einem Urformungsverfahren und/oder Umformungsverfahren und/oder trennenden Verfahren und/oder spanenden Verfahren hergestellt wird.
